# FASCICULE DE BREVET EUROPEEN

(11) **EP 3 958 991 B1**
(45) Date de publication et mention de la délivrance du brevet: **01.01.2025**
(21) Numéro de dépôt: 20717872.4
(22) Date de dépôt: 09.04.2020
(51) Int. Cl.: A63C 17/22, B60B 5/02, B60C 7/00, C08K 3/04, C08K 5/098, C08K 5/14, C08L 7/00, C08L 21/00

(54) **BANDAGE POUR ROUE DE VÉHICULE TRANSPORTABLE MANUELLEMENT**
REIFEN FÜR EIN MANUELL TRANSPORTIERBARES FAHRZEUGRAD
TYRE FOR A MANUALLY TRANSPORTABLE VEHICLE WHEEL

(30) Priorité: 26.04.2019 FR 1904451
(43) Date de publication de la demande: 02.03.2022
(73) Titulaire: COMPAGNIE GENERALE DES ETABLISSEMENTS MICHELIN, 63000 Clermont-Ferrand (FR)
(72) Inventeur: LEMERLE, Frédéric, 63040 CLERMONT-FERRAND Cedex 9 (FR); VOGE, Bozena, 63040 CLERMONT-FERRAND Cedex 9 (FR); POTIN, Yves, 63040 CLERMONT-FERRAND Cedex 9 (FR); PIBRE, Guillaume, 63040 CLERMONT-FERRAND Cedex 9 (FR)
(74) Mandataire: M.F.P. Michelin
(86) Numéro de dépôt international: PCT/EP2020/060235
(87) Numéro de publication internationale: WO 2020/216635

(56) Documents cités:
- EP-A1- 0 962 239
- WO-A1-03/066352
- CN-A- 102 898 693

## Description

La présente invention est relative à des bandages pour roues de véhicules légers de type trottinettes, patins à roulettes, patins à roulettes en ligne, planches à roulettes, etc.

La présente description décrit particulièrement des bandages pour roues de trottinettes pour des raisons de simplicité de rédaction. Toutefois, les bandages et roues décrits dans la présente description ne sont pas limités à ces moyens de locomotion et concernent également d'autres types de véhicules transportables manuellement, tels que les patins à roulettes, patins à roulettes en ligne, planches à roulettes, etc.

Une roue de trottinette est habituellement composée d'un moyeu central, généralement formé d'un matériau plastique, et d'un bandage, généralement plein, dont la partie radialement extérieure (la bande de roulement) est destinée à entrer en contact avec le sol lors du roulage. Le bandage peut être disposé directement sur le moyeu ou bien sur un support disposé entre le bandage et le moyeu. Des telles roues ont largement été décrites dans l'art antérieur, notamment dans les documents WO 2005/110558, WO 2018/045225, WO 2003/008050, US 6,286,907, WO 98/04423, WO 97/01378, EP 0 698 404, et WO 98/58712.

CN 102 898 693 divulgue un bandage pour une roue destinée à équiper une trottinette caractérisé par une bonne adhérence et une bonne résistance à l'usure. Généralement, les bandages pour roue de trottinette ou de patin à roulettes sont constitués d'une composition à base de polyuréthane, qui est connu de l'homme du métier pour sa grande résistance à l'abrasion (FR 2 831 175).

Les véhicules transportables manuellement selon l'invention sont autant utilisés en tant que simple moyen de locomotion que pour le loisir et le sport. En particulier, de nombreux utilisateurs de tels véhicules apprécient de réaliser différentes actions telles que les rotations, les sauts, ou les dérapages contrôlés. Par conséquent, les bandages de ces véhicules doivent à la fois assurer la sécurité de l'utilisateur, mais également lui procurer un plaisir d'utilisation.

La sécurité de l'utilisateur est notamment prise en compte par le niveau d'adhérence de la bande de roulement, que ce soit sur sol sec ou sur sol humide. Le plaisir procuré à l'utilisateur peut quant à lui provenir de plusieurs paramètres, par exemple le bruit de la roue lors du roulage, le confort procuré par la roue, mais également la résistance au roulement. En effet, plus la résistance au roulement est faible et moins l'utilisateur aura à faire d'efforts pour avancer. Par ailleurs, pour les véhicules à moteur, par exemple pour une trottinette électrique, une plus faible résistance au roulement se traduira par une autonomie d'utilisation plus importante, permettant à l'utilisateur de moins se soucier de la charge de la batterie.

Actuellement, les solutions proposées pour améliorer la stabilité de trottinettes ou de patins à roulettes en ligne, notamment lors de dérapages, consistent à réaliser des rainures à la surface latérale du bandage (EP 0 962 239).

Par ailleurs, les solutions proposées pour améliorer la résistance au roulement de tels véhicules s'intéressent majoritairement à améliorer le roulement du moyeu central.

Ainsi, les solutions actuellement proposées ne s'intéressent pas à la composition des bandages pour roue de véhicules transportables manuellement au sens de l'invention.

Les bandages pour roues de trottinette, du fait de la nature de ces véhicules (poids, dimension de leurs roues, conditions d'utilisation, etc.), sont soumis à des contraintes très spécifiques. La simple transposition de solutions connues dans d'autres domaines, par exemples pneumatiques de motos, vers le domaine des bandages pour roues de trottinette ne permet pas de résoudre le compromis de performance que sont la résistance au roulement et l'adhérence, sans trop pénaliser, voire en conservant, les autres performances attendues d'un bandage pour roue de trottinette, notamment la résistance à l'usure.

Ainsi, les fabricants de bandages pour roues de véhicules transportables manuellement sont toujours à la recherche de solutions pour améliorer davantage un compromis de propriétés, que sont notamment la résistance au roulement et l'adhérence, en particulier l'adhérence sur sol mouillé.

Poursuivant ses recherches, la Demanderesse a découvert de façon inattendue que l'utilisation combinée de certains co-agents de réticulation et d'activateurs radicalaires, dans des compositions de caoutchouc de bandage pour roue de ce type de véhicule, permet d'améliorer le compromis de performance précité.

Ainsi, la présente invention a notamment pour objet un bandage pour roue de véhicule transportable manuellement ou destinée à un véhicule transportable manuellement, comprenant une composition à base d'au moins un élastomère diénique, au moins une charge renforçante, et un système de réticulation comportant au moins un amorceur de polymérisation radicalaire, et un co-agent de réticulation choisi dans le groupe constitué par les composés (méth)acrylates, les composés maléimides, les composés allyliques, les composés vinyliques et leurs mélanges. De préférence, la présente invention est relative à un bandage, de préférence un bandage non-pneumatique, pour roue de trottinette (ou destinée à équiper une trottinette) comprenant une composition à base d'au moins un élastomère diénique, au moins une charge renforçante, et un système de réticulation comportant au moins un amorceur de polymérisation radicalaire, et un co-agent de réticulation choisi dans le groupe constitué par les composés (méth)acrylates, les composés maléimides, les composés allyliques, les composés vinyliques et leurs mélanges. De préférence, la présente invention est relative à un bandage, de préférence un bandage plein (non-pneumatique), pour roue de trottinette (ou destinée à équiper une trottinette) comprenant une composition à base d'au moins un élastomère diénique, au moins une charge renforçante, et un système de réticulation comportant au moins un peroxyde et un le co-agent de réticulation comprend un dérivé d'acrylate de formule (I) :

**[X]ₚ A** **(I)**

dans laquelle,
- [X]p correspond à un radical de formule (II) : 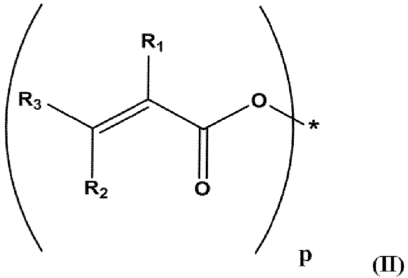 dans laquelle,
   ∘ R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
   ∘ (*) représente le point d'attachement du radical de formule (II) à A,
- A représente un atome appartenant au groupe constitué par les métaux alcalino-terreux ou les métaux de transition, un atome de carbone, un groupement hydrocarboné en C₁-C₃₀ éventuellement interrompu et/ou substitué par un ou plusieurs hétéroatome, ou un groupement comprenant de 2 à 30 unités monomère, les unités monomère étant choisies dans le groupe constitué par les unités monomères époxydes, esters, éthers, amines, acryliques, siloxanes et uréthanes,
- A comprenant p valences libres, p ayant une valeur allant de 1 à 20,
- étant entendu que les 1 à 20 radicaux X sont identiques ou différents.

La présente invention a également pour objet une roue comprenant un bandage selon l'invention, ainsi qu'un véhicule transportable manuellement comprenant au moins une roue selon l'invention.

Dans la présente, sauf indication contraire, les expressions « la composition » désigne la composition du bandage pour roue destinée à équiper un véhicule transportable manuellement selon l'invention.

### I- DÉFINITIONS

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Véhicule transportable manuellement

Par « véhicule transportable manuellement », on entend un véhicule pouvant être soulevé par une personne susceptible d'utiliser ce véhicule, à l'aide de sa propre force et sans effort excessif.

Ainsi, le véhicule transportable manuellement selon l'invention peut avoir une masse inférieure à 42 kg, typiquement comprise dans un domaine allant de 0,2 à 30 kg, de préférence de 0,5 à 20 kg, de préférence de 1 à 15 kg.

De préférence, le véhicule transportable manuellement est choisi dans le groupe constitué par les trottinettes, les patins à roulettes, les patins à roulettes en ligne, les planches à roulettes, les monoroues, les gyropodes, les planches gyroscopiques (également appelées gyroskate ou hoverboard), de préférence dans le groupe constitué par les trottinettes et les patins à roulettes en ligne.

La composition du bandage pour véhicule transportable manuellement est particulièrement bien adaptée aux trottinettes, notamment aux trottinettes électriques dont la vitesse de roulage peut atteindre 30 km/h, voire 45 km/h par exemple. Ainsi, de manière particulièrement avantageuse, le véhicule transportable manuellement est une trottinette, de préférence encore une trottinette électrique.

L'homme du métier comprend bien que les véhicules transportables manuellement selon l'invention n'englobent pas, notamment, les voitures, les motos, les mobylettes, les camions, etc.

### II-2 Bandage et roue pour véhicule transportable manuellement

Le bandage selon l'invention est destiné à être monté sur un moyeu ou une jante de véhicule transportable manuellement, l'ensemble moyeu (ou jante) et bandage formant ainsi une roue. Il sert donc d'interface entre un moyeu (ou une jante) et le sol. Le bandage selon l'invention peut se trouver à l'état monté ou non monté.

Les caractéristiques, notamment les dimensions, du bandage selon l'invention, ne sont pas les mêmes en fonction du véhicule transportable manuellement, en particulier en fonction de la roue sur laquelle il est destiné être disposé.

Toutefois, l'homme du métier saura aisément adapter les caractéristiques du bandage en fonction de la roue pour laquelle il est destiné. A titre d'exemple de roue conforme à l'invention on peut se référer au document WO 2018/045225 pour les trottinettes, et aux documents WO 2005/110558 et WO 2003/008050 pour les patins à roulettes en ligne.

Selon l'invention, le bandage peut être un bandage non pneumatique ou un bandage pneumatique. En d'autres termes, une fois monté sur la roue, le bandage peut être, ou non, mis sous pression à l'aide d'un gaz de gonflage (de l'air en général).

En particulier, le bandage pneumatique est destiné à être gonflé par un gaz pour pouvoir porter une charge, alors que le bandage non pneumatique est destiné à porter une charge par sa seule structure.

Le bandage non pneumatique peut être par exemple un bandage plein ou encore un bandage creux destiné à être déposé sur un support (ou insert) qui est disposé entre le moyeu (ou la jante) et le bandage. De tels supports ou inserts sont bien connus de l'homme du métier (voir par exemple WO 2018/045225, WO 97/01378), et sont couramment utilisés, notamment pour diminuer la quantité de composition à utiliser pour fabriquer le bandage.

Par ailleurs, le diamètre des bandages pour roue destinée à équiper des véhicules transportables manuellement est généralement bien inférieur au diamètre des bandages d'autres types de véhicules tels que les voitures, motos, etc. Les bandages selon l'invention sont avantageusement destinés à être montés sur un moyeu ou une jante ayant un diamètre extérieur inférieure ou égal à 16 pouces, de préférence compris dans un domaine allant de 2 à 16 pouces, de préférence de 6 à 12 pouces. Ainsi, selon l'invention, la dimension des bandages selon l'invention est avantageusement inférieure ou égale à 16 pouces, elle est de préférence comprise dans un domaine allant de 2 à 16 pouces, de préférence de 6 à 12 pouces.

Selon l'invention, l'ensemble du bandage peut être à base d'une même composition. La composition du bandage présentant de très bonnes performances d'adhérence, la composition du bandage est avantageusement présente au moins, exclusivement ou non, dans la bande de roulement du bandage pour roue destinée à équiper un véhicule transportable manuellement.

### II-3 Composition du bandage

### II-3.1 Matrice élastomérique

La composition du bandage selon l'invention peut contenir un seul élastomère diénique ou un mélange de plusieurs élastomères diéniques.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Avantageusement, l'élastomère diénique est un élastomère diénique essentiellement insaturé.

On entend particulièrement par élastomère diénique susceptible d'être utilisé dans le cadre de la présente invention :
a) tout homopolymère d'un monomère diène, conjugué ou non, ayant de 4 à 18 atomes de carbone,
b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

A titre d'α-monooléfines aliphatiques conviennent notamment les α-monooléfines aliphatiques acycliques ayant de 3 à 18 atomes de carbone.

De préférence, l'élastomère diénique peut être :
a') tout homopolymère d'un monomère diène conjugué, notamment tout homopolymère obtenu par polymérisation d'un monomère diène conjugué ayant de 4 à 12 atomes de carbone;
b') tout copolymère obtenu par copolymérisation d'un ou plusieurs diènes conjugués ayant de 4 à 12 atomes de carbone entre eux ou avec un ou plusieurs composés vinylaromatiques ayant de 8 à 20 atomes de carbone;
b") tout copolymère obtenu par copolymérisation d'un ou plusieurs diènes, conjugués ou non, avec l'éthylène, une α-monooléfine ou leur mélange comme par exemple les élastomères obtenus à partir d'éthylène, de propylène avec un monomère diène non conjugué du type précité.

Préférentiellement, l'élastomère diénique est choisi dans le groupe constitué par les polybutadiènes (BR), les polyisoprènes de synthèse (IR), le caoutchouc naturel (NR), les copolymères de butadiène, les copolymères d'isoprène et leurs mélanges.

Les copolymères de butadiène sont préférentiellement choisis dans le groupe constitué par les copolymères de butadiène-styrène (SBR). On notera que le SBR peut être préparé en émulsion (ESBR) ou en solution (SSBR). Qu'il s'agisse de ESBR ou de SSBR. Parmi les copolymères à base de styrène et de butadiène, en particulier SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%. Avantageusement, le copolymère butadiène-styrène est un SBR préparé en solution et présente une teneur en styrène comprise entre 5% et 60%, de préférence de 6% à 30%, en poids par rapport au poids total du copolymère, et une teneur (% molaire) en liaisons -1,2 de la partie butadiénique comprise entre 4% et 75%, de préférence entre 15% et 30%.

Préférentiellement, l'élastomère diénique est choisi dans le groupe constitué par les polybutadiènes, les polyisoprènes de synthèse, le caoutchouc naturel, les copolymères de butadiène-styrène et leurs mélanges, de préférence dans le groupe constitué par les polyisoprènes de synthèse, le caoutchouc naturel et leurs mélanges. De préférence encore, l'élastomère diénique est le caoutchouc naturel.

L'élastomère diénique peut être, de manière avantageuse également, un coupage de polyisoprène et de polybutadiène.

Par « polyisoprène » (également appelé « élastomère isoprénique »), on entend de manière connue un homopolymère ou un copolymère d'isoprène. De préférence, le polyisoprène un élastomère diénique choisi dans le groupe constitué par le caoutchouc naturel (NR), les polyisoprènes de synthèse (IR), les copolymères d'isoprène et leurs mélanges. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Le polyisoprène est de préférence du caoutchouc naturel, un polyisoprène de synthèse ou un de leurs mélanges. De préférence le polyisoprène de synthèse présente un taux (% molaire) de liaisons cis-1,4 supérieur à 90%, plus préférentiellement encore supérieur à 98%.

De préférence, le polybutadiène présente une température de transition vitreuse comprise dans un domaine allant de -90 à -120°C, de préférence de -100 à -115°C.

Avantageusement, dans la composition du bandage selon l'invention, le taux de polyisoprène est compris dans un domaine allant de 30 à 100 pce et le taux de polybutadiène est compris dans un domaine allant de 0 à 70 pce. Plus préférentiellement encore, dans la composition du bandage selon l'invention, le taux de polyisoprène est compris dans un domaine allant de 60 à 100 pce, de préférence de 80 à 95 pce, et le taux de polybutadiène est compris dans un domaine allant de 0 à 40 pce, de préférence de 5 à 20 pce.

Le taux total de polyisoprène et de polybutadiène, dans la composition du bandage selon l'invention, peut être compris dans un domaine allant de 60 à 100 pce, de préférence de 70 à 100 pce. Avantageusement, le taux total de polyisoprène et de polybutadiène, dans la composition du bandage selon l'invention, est de 100 pce. Egalement, le taux de polyisoprène, de préférence de caoutchouc naturel, peut être le seul élastomère de la composition de caoutchouc, son taux étant alors de 100 pce.

### II-3.2 Charge renforçante

La composition du bandage selon l'invention comprend en outre une charge renforçante, connue pour ses capacités à renforcer une composition de caoutchouc.

La charge renforçante peut comprendre du noir de carbone, une charge renforçante inorganique ou un de leurs mélanges. Avantageusement, la charge renforçante comprend majoritairement, de préférence exclusivement, du noir de carbone.

Le taux de charge renforçante, de préférence de noir de carbone, dans la composition est de préférence compris dans un domaine allant de 1 à 200 pce, de préférence de 5 à 80 pce, de préférence encore de 10 à 50 pce.

Les noirs utilisables dans le cadre de la présente invention peuvent être tout noir conventionnellement utilisé dans le domaine des pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. De préférence, la silice présente une surface spécifique BET inférieure à 200 m²/g et/ou une surface spécifique CTAB est inférieure à 220 m²/g, de préférence une surface spécifique BET comprise dans un domaine allant de 125 à 200 m²/g et/ou une surface spécifique CTAB comprise dans un domaine allant de 140 à 170 m²/g.

La surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

A titres de silices utilisables dans le cadre de la présente invention, on citera par exemple les silices précipitées hautement dispersibles (dites « HDS » pour « highly dispersible » ou « highly dispersible silica »). Ces silices, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

La teneur en agent de couplage dans la composition de l'invention représente avantageusement de 0,5% à 15% en poids par rapport à la quantité de charge inorganique renforçante. Son taux est préférentiellement compris dans un domaine allant de 0,5 à 10 pce, plus préférentiellement compris dans un domaine allant de 1 à 5 pce. Ce taux est aisément ajusté par l'homme du métier selon le taux de charge inorganique renforçante utilisé dans la composition de l'invention.

### II-3.3 Système de réticulation

La composition du bandage selon l'invention comprend également un système de réticulation comportant au moins un amorceur de polymérisation radicalaire, et un co-agent de réticulation choisi dans le groupe constitué par les composés (méth)acrylates, les composés maléimides, les composés allyliques, les composés vinyliques et leurs mélanges.

### Amorceur de polymérisation radicalaire

Les amorceurs de polymérisation radicalaire sont une source de radicaux libres nécessaires à la polymérisation de la composition du bandage selon l'invention. Ces composés sont bien connus de l'homme du métier et son décrit notamment dans les documents WO 2002/22688 A1 et FR 2 899 808 A1 par exemple, ainsi que dans le document Denisov et al. (« Handbook of free radical initiators », John Wiley & Sons, 2003).

De préférence, selon l'invention, l'au moins amorceur de polymérisation radicalaire est choisi dans le groupe constitué par les peroxydes, les composés azoïques, les systèmes rédox (oxydo-réduction) et leurs mélanges, de préférence dans le groupe constitué par les peroxydes, les composés azoïques, et leurs mélanges. De préférence encore, l'au moins amorceur de polymérisation radicalaire est un peroxyde ou un mélange de plusieurs peroxydes. Il peut s'agir de tout peroxyde connu de l'homme de l'art. Parmi les peroxydes, bien connus de l'homme de l'art, il est préférable d'utiliser dans le cadre de la présente invention un peroxyde organique.

Par « peroxyde organique », on entend un composé organique, c'est-à-dire contenant du carbone, comportant un groupe -O-O- (deux atomes d'oxygène liés par une liaison covalente simple). Durant le procédé de réticulation, le peroxyde organique se décompose au niveau de sa liaison instable O-O en radicaux libres. Ces radicaux libres permettent la création des liaisons de réticulation.

Le peroxyde organique est de préférence choisi dans le groupe comprenant ou consistant en les peroxydes de dialkyle, les monoperoxycarbonates, les peroxydes de diacyle, les peroxycétales ou les peroxyesters.

De préférence, les peroxydes de dialkyle sont choisis dans le groupe comprenant ou consistant en le peroxyde de dicumyle, le peroxyde de di-t-butyle, peroxyde de t-butylcumyle, le 2,5-diméthyl-2,5-di(t-butylperoxy)hexane, le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, α,α'-di-[(t-butyl-peroxy)isopropyl] benzène, le α,α'-di-[(t-amylperoxy)isopropyl] benzène, le peroxyde de di-t-amyle, le 1,3,5-tri-[(t-butylperoxy)isopropyl]benzène, le 1,3-diméthyl-3-(t-butylperoxy)butanol, et le 1,3-diméthyl-3-(t -amylperoxy) butanol.

Certains monoperoxycarbonates tels que le OO-tert-butyl-O-(2-éthylhexyl) monoperoxycarbonate, OO-tert-butyl-O-isopropyl monoperoxycarbonate et OO-tert-amyl-O-2-éthyl hexyl monoperoxycarbonate, peuvent également être utilisés.

Parmi les peroxydes de diacyles, le peroxyde préféré est le peroxyde de benzoyle.

Parmi les peroxycétales, les peroxydes préférés sont choisis dans le groupe comprenant ou consistant en le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane et leurs mélanges. De préférence, les peroxyesters sont choisis dans le groupe consistant en le tert-butylperoxybenzoate, le tert-butyleperoxy-2-ethylhexanoate et le tert-butyleperoxy-3,5,5-triméthylehexanoate.

En résumé, le peroxyde organique est, de manière particulièrement préférée, choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges. De préférence encore le peroxyde organique est choisi dans le groupe constitué par dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

A titre d'exemple de peroxyde utilisable dans le cadre de la présente invention et disponible dans le commerce on peut citer le « Dicup » de la société Hercules Powder Co., le « Perkadox Y12 » de la Société Noury van der Lande, le « Peroximon F40 » de la société Montecatini Edison S.p.A., le « Trigonox » de la Société Noury van der Lande, le « Varox » de la société R.T.Vanderbilt Co., ou encore le « Luperko », de la société Wallace & Tiernan, Inc.

Par « composé azoïque », on entend un composé dont la structure moléculaire contient au moins une liaison -N=N- (deux atomes d'azote liés par une liaison covalente double).

De préférence, le composé azoïque est choisi dans le groupe constitué par le 2-2'-azobis(isobutyronitrile), le 2,2'-azobis(2-butanenitrile), le 4,4'-azobis(4-acide pentanoïque), le 1,1'-azobis(cyclohexanecarbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate et leurs mélanges.

A titre d'exemple de composé azoïque utilisable dans le cadre de la présente invention et disponible commercialement, on peut citer le 2-2'-azobis(isobutyronitrile) de la société Sigma-Aldrich.

Par « systèmes rédox », on entend une combinaison de composés provocant une réaction d'oxydoréduction qui engendre des radicaux.

Il peut s'agir par exemple des combinaisons de peroxydes avec des amines tertiaires (par exemple les couples: benzoyl peroxyde plus diméthylaniline); d'hydroperoxydes avec des métaux de transition (tels que le mélange cumène hydroperoxyde plus cobalt naphthénate).

Avantageusement, le taux d'amorceur radicalaire, de préférence de peroxyde, dans la composition du bandage selon l'invention, est compris dans un domaine allant de 0,1 à 10 pce, de préférence de 0,5 à 5 pce, de préférence encore de 1 à 4 pce.

### Co-agent de réticulation

Selon l'invention, le co-agent de réticulation est choisi dans le groupe constitué par les composés (méth)acrylates, les composés maléimides, les composés allyliques, les composés vinyliques et leurs mélanges.

De préférence, le co-agent comprend un composé (méth)acrylate, sous forme de sel métallique, ou d'ester ou sous forme polymérique.

De préférence encore, le co-agent de réticulation comprend un dérivé d'acrylate de formule (I) :

**[X]ₚ A** **(I)**

dans laquelle,
- [X]p correspond à un radical de formule (II) : 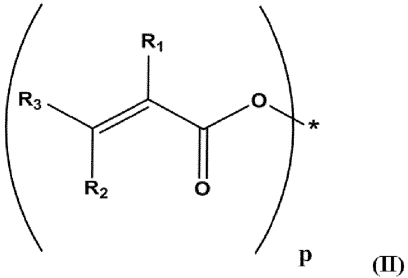 dans laquelle,
   ∘ R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
   ∘ (*) représente le point d'attachement du radical de formule (II) à A,
- A représente un atome appartenant au groupe constitué par les métaux alcalino-terreux ou les métaux de transition, un atome de carbone, un groupement hydrocarboné en C₁-C₃₀ éventuellement interrompu et/ou substitué par un ou plusieurs hétéroatome, ou un groupement comprenant de 2 à 30 unités monomère, les unités monomère étant choisies dans le groupe constitué par les unités monomères époxydes, esters, éthers, amines, acryliques, siloxanes et uréthanes,
- A comprenant p valences libres, p ayant une valeur allant de 1 à 20,
- étant entendu que les 1 à 20 radicaux X sont identiques ou différents.

Selon l'invention, la liaison entre X et A peut être une liaison ionique ou une liaison covalente. L'homme du métier comprend bien que lorsque A représente un atome appartenant au groupe constitué par les métaux alcalino-terreux ou les métaux de transition, notamment Zn ou Mg, la liaison entre X et A est une liaison ionique. Par ailleurs, lorsque A représente un atome de carbone ou un groupement hydrocarboné en C₁-C₃₀, l'homme du métier comprend bien que la liaison entre X et A est une liaison covalente.

Par groupe alkyle cyclique, on entend un groupe alkyle comprenant un ou plusieurs cycles.

Par groupement ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne.

Par groupement ou chaîne hydrocarboné(e) substitué(e) par un ou plusieurs hétéroatomes, on entend un groupe ou chaîne comprenant un ou plusieurs hétéroatomes, chaque hétéroatome étant lié au groupement ou à la chaînée hydrocarboné(e) par une liaison covalente sans interrompre le groupement ou la chaînée hydrocarboné(e).

Par « unité monomère », on entend la forme réagie d'au moins un monomère dans le dérivé d'acrylate de formule (I).

Lorsque A comprend un groupement hydrocarboné cyclique, il peut s'agir d'un groupement hydrocarboné cyclique non-aromatique ou aromatique.

Le ou les hétéroatomes des radicaux R₁, R₂, R₃ et A peuvent être, indépendamment les uns des autres, des atomes d'oxygène, de soufre, d'azote, de phosphore ou de silicium, de préférence des atomes d'oxygène ou d'azote.

Quelle que soit la nature du radical A, R₁, R₂ et R₃ peuvent représenter indépendamment les uns des autres un atome d'hydrogène, un groupement méthyle ou un groupement éthyle, de préférence R₁, R₂ et R₃ représente indépendamment les uns des autres un atome d'hydrogène ou un groupement méthyle.

Avantageusement, R₁ peut représenter un groupement méthyle et R₂ et R₃ peuvent représenter chacun un atome d'hydrogène. Alternativement, R₁, R₂ et R₃ peuvent représenter chacun un atome d'hydrogène.

Le nombre de valence p dépend de la nature du radical A. Selon l'invention, p peut valoir de 1 à 20, par exemple il peut être de 1, alternativement il peut être de 2 à 6, de préférence de 2 à 4.

Selon un premier mode de réalisation de l'invention, quels que soient les groupements R₁, R₂ et R₃ :
∘ A représente un atome appartenant au groupe constitué par les métaux alcalino-terreux ou les métaux de transition, un atome de carbone ou un groupement hydrocarboné en C₁-C₁₃, de préférence en C₁-C₈,
∘ A comprenant p valences libres, p ayant une valeur allant de 2 à 4,
∘ étant entendu que les 2 à 4 radicaux X du dérivé d'acrylate de formule (I) sont identiques ou différents, de préférences identiques.

Selon l'invention, lorsque A représente un atome appartenant au groupe constitué par les métaux alcalino-terreux ou les métaux de transition, il peut s'agir par exemple d'un atome choisi dans le groupe constitué par Zn et Mg. De préférence, le dérivé d'acrylate de formule (I) est alors de préférence un dérivé du diacrylate de zinc sous la forme d'un sel de zinc de formule (III) 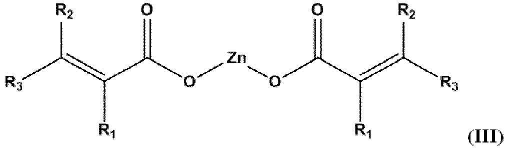 dans laquelle R₁, R₂ et R₃ représentent indépendamment les uns des autres un atome d'hydrogène ou un groupe hydrocarboné en C₁-C₇ choisi parmi les groupes alkyles linéaires, ramifiés ou cycliques, les groupes aralkyles, les groupes alkylaryles et les groupes aryles, et éventuellement interrompus par un ou plusieurs hétéroatomes, R₂ et R₃ pouvant former ensemble un cycle non aromatique.

Lorsque A représente un groupement hydrocarboné en C₁-C₈ , de préférence C₁-C₈, il peut s'agir par exemple d'un groupement hydrocarboné en C₁-C₇, de préférence en C₁-C₆, de préférence en C₁-C₅.

Par exemple, le groupement hydrocarboné en C₁-C₁₃ est choisi dans le groupe constitué par les radicaux suivants : 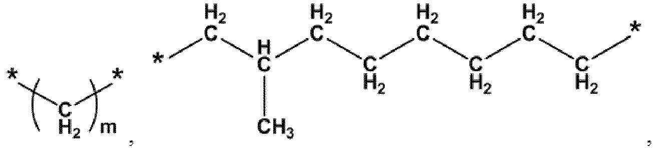 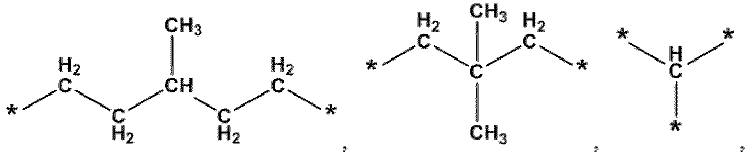 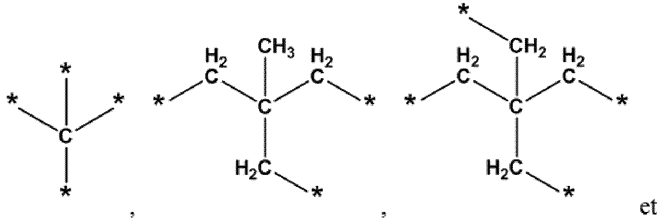 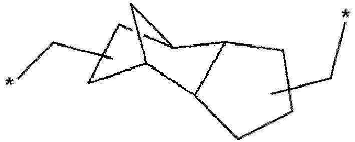 dans lesquels, m est un nombre entier allant de 1 à 13, de préférence de 6 à 10, et (*) représente le point d'attachement de A au radical de formule (II).

Par exemple, le groupement hydrocarboné en C₁-C₈ est choisi dans le groupe constitué par les radicaux suivants : 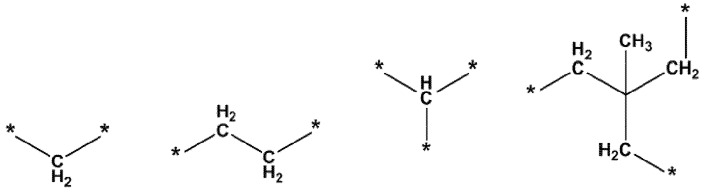 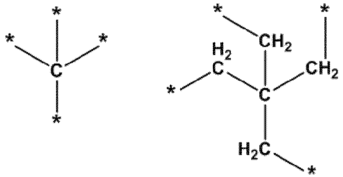 dans lesquels, (*) représente le point d'attachement de A au radical de formule (II).

Ainsi, selon l'invention, le dérivé d'acrylate de formule (I) peut être choisi parmi le diméthacrylate de zinc (ZDMA), le diméthacrylate de magnésium (MgDMA), le diacrylate de zinc (ZMA), le diacrylate de magnésium (MgMA), le triméthylopropane triméthylacrylate (TMPTMA), triméthylolproprane triacrylate (TMPTA) et leurs mélanges. De préférence, le dérivé d'acrylate de formule (I) est le ZDMA, MgDMA, ou leur mélange.

A titre d'exemple, on trouve dans le commerce des dérivés de diacrylate tels que le diacrylate de zinc (ZDA) « DYMALINK 633 » de la société CRAY VALLEY, le diméthacrylate de zinc (ZDMA) « DYMALINK 634 » de la société CRAY VALLEY ou le triméthylolpropane triméthacrylate (TMPTMA) « SR351 » de la société SARTOMER.

Selon un deuxième mode de réalisation de l'invention, quels que soient les groupements R₁, R₂ et R₃,
∘ A peut être un groupement hydrocarboné en C₁-C₃₀ choisi parmi les groupes alkyles, linéaires, ramifiés ou cycliques, et éventuellement interrompus et/ou substitués par un ou plusieurs hétéroatomes.
∘ A comprenant p valences libres, p valant 1.

De préférence, A représente un groupe alkyle linéaire ou ramifié en C₃-C₃₀, éventuellement interrompu et/ou substitué par un ou plusieurs atomes d'oxygène ou d'azote, de préférence d'oxygène. De préférence encore, A représente un alkyle linéaire ou ramifié en C₅-C₂₀, de préférence en C₆-C₁₆, éventuellement interrompu et/ou substitué par un ou plusieurs atomes d'oxygène ou d'azote, de préférence d'oxygène. Selon ce mode de réalisation, A n'est avantageusement pas interrompu et/ou substitué par un ou plusieurs hétéroatomes. Alternativement, selon ce mode de réalisation A est interrompu et/ou substitué par un ou plusieurs hétéroatomes, de préférence un ou plusieurs atomes d'oxygène ou d'azote, de préférence d'oxygène.

Selon ce deuxième mode de réalisation le dérivé d'acrylate de formule (I) peut être choisi dans le groupe constitué par le (méth)acrylate de lauryle, le (méth)acrylate de stéaryle, le (méth)acrylate de polycaprolactone, le (méth)acrylate d'isophoryle, le (méth)acrylate de tertiobutyle cyclohexyle, le (méth)acrylate de 4-acétoxyphenethyle, le 4-acryloylmorpholine, le (méth)acrylate de butyle, le (méth)acrylate de tert-butyle, le 2-propyl(méth)acrylate de benzyle, le (méth)acrylayte de2-[[(butylamino)carbonyl]oxy]éthyle, le (méth)acrylate de 2-carboxyéthyle, le (méth)acrylate d'oligo-2-carboxyéthyle, le (méth)acrylate de 2-(diéthylamino)éthyle, le (méth)acrylate de di(éthylène glycol) éthyl éther, le (méth)acrylate de 2-(diméthylamino)éthyle, le (méth)acrylate de 3-(diméthylamino)propyle, le (méth)acrylate d'éthylène glycol dicyclopentènyle, le (méth)acrylate d'éthylène glycol méthyl éther, le (méth)acrylate d'éthylène glycol phényl éther, le (méth)acrylate de 2-éthylhexyle, le (méth)acrylate d'hexyle, le (méth)acrylate de 4-hydroxybutyle, le (méth)acrylate de 2-hydroxyéthyle, le (méth)acrylate de 2-hydroxy-3-phénoxypropyle, le (méth)acrylate d'hydroxypropyle, le (méth)acrylate d'isobornyle, le (méth)acrylate d'isobutyle, le (méth)acrylate d'isodecyle, le (méth)acrylate d'isooctyle, le (méth)acrylate d'octadecyle, le (méth)acrylate de poly(éthylene glycol) méthyl éther, le (méth)acrylate de poly(propylène glycol), le N-Propyl(méth)acrylamide, le (méth)acrylate de tétrahydrofurfuryle, le (méth)acrylate de 2-tétrahydropyranyl, le (méth)acrylate de 3,5,5-triméthylhexyle, le (méth)acrylate de 10-undecenyle, le (méth)acrylate de nonyl phénol éthoxylé, le (méth)acrylate de nonyl phénol propoxylé, le (méth)acrylate de phenoxyéthye, le mono(méth)acrylate de nonylphenol éthoxylé, le mono(méth)acrylate de nonylphenol propoxylé, le (méth)acrylate d'o-phenylphenoxyéthyle, le (méth)acrylate de 2-[[butylamino)carbonyl]oxy]éthyle, le (méth)acrylate de 2-(2-éthoxyéthoxy) éthyle, le (méth)acrylate d'octyl decyle, le (méth)acrylate d'isodecyle, le (méth)acrylate de néopentylglycol monomethyl éther propoxylé, le (méth)acrylate de tricyclodecane méthanol et leurs mélanges.

A titre d'exemple de dérivé d'acrylate de formule (I) disponible dans le commerce et répondant à ce mode de réalisation, on peut citer par exemple ceux de la société SIGMA-ALDRICH : l'acrylate de lauryle (LA) ; ceux de la société RAHN AG sous la dénomination GENOMER, 1120 ou sous la dénomination MIRAMER M140 ; ceux de la société IGM RESINS, sous la dénomination PHOTOMER 4135 ou 4211 ; ou encore ceux de la société sous la dénomination SARTOMER SR217, SR335 ou SR531.

Selon un troisième mode de réalisation de l'invention, quels que soient les groupements R₁, R₂ et R₃ :
∘ A représente un groupement hydrocarboné en C₄-C₃₀, linéaire, ramifié ou cyclique, interrompu et/ou substitué par un ou plusieurs hétéroatomes,
∘ A comprenant p valences libres, p ayant une valeur allant de 2 à 6,
∘ étant entendu que les 2 à 6 radicaux X du dérivé d'acrylate de formule (I) sont identiques ou différents, de préférence identiques.

Selon ce troisième mode de réalisation, le ou les hétéroatomes de A peuvent avantageusement être choisis dans le groupe constitué par les atomes d'oxygène, de soufre, d'azote, de silicium, de phosphore et leurs combinaisons. De préférence, le ou les hétéroatomes de A sont choisis dans le groupe constitué par atomes d'oxygène et de soufre. De préférence encore, le ou les hétéroatomes de A sont des atomes d'oxygène.

En d'autres termes, selon ce troisième mode de réalisation, A représente avantageusement un groupement hydrocarboné en C₄-C₃₀, linéaire, ramifié ou cyclique, interrompu et/ou substitué par un ou plusieurs hétéroatomes choisis parmi les atomes d'oxygène, de soufre, d'azote, de silicium, de phosphore et leurs combinaisons, de préférence choisis dans le groupe constitué par atomes d'oxygène et de soufre. De préférence encore A représente avantageusement un groupement hydrocarboné en C₄-C₃₀, linéaire, ramifié ou cyclique, de préférence, linéaire ou ramifié, interrompu et/ou substitué par un ou plusieurs atomes d'oxygène et/ou de soufre, de préférence interrompu et/ou substitué par un ou plusieurs atomes d'oxygène.

De préférence, selon ce troisième mode de réalisation, A représente un groupement hydrocarboné en C₄-C₃₀, linéaire, ramifié ou cyclique, de préférence linéaire ou ramifié, interrompu par un ou plusieurs atomes d'oxygène et/ou de soufre, de préférence interrompu par un ou plusieurs atomes d'oxygène. De préférence encore, A représente un groupement hydrocarboné en C₄-C₃₀, linéaire ou ramifié, interrompu par un ou plusieurs atomes d'oxygène.

Selon ce troisième mode de réalisation, lorsque A représente un groupement hydrocarboné en C₄-C₃₀, il peut s'agir par exemple d'un groupement hydrocarboné en C₅-C₂₀, de préférence en C₆-C₁₆.

Selon l'invention, selon ce troisième mode de réalisation, le dérivé d'acrylate plurifonctionnel de formule (I) est préférentiellement choisi dans le groupe constitué par le penta(méth)acrylate de dipentaerythriol, l'hexa(méth)acrylate de dipentaerythriol, le di(méth)acrylate de diéthylène glycol, le di(méth)acrylate de dipropylène glycol, le di(méth)acrylate d'hexanediol éthoxylé, le di(méth)acrylate d'hexanediol propoxylé, le tri(méth)acrylate de triméthylpropane éthoxylé, le tri(méth)acrylate de triméthylpropane propoxylé, le tétra(méth)acrylate de pentaerythritol éthoxylé, le tétra(méth)acrylate de pentaerythritol propoxylé, le di(méth)acrylate de bisphénol A éthoxylé, le di(méth)acrylate de bisphénol A propoxylé, le di(méth)acrylate d'hexanediol glycol éthoxylé, le di(méth)acrylate d'hexanediol glycol propoxylé, le di(méth)acrylate de neopentyl glycol éthoxylé, le di(méth)acrylate de neopentyl glycol propoxylé, le tri(méth)acrylate de glycérol éthoxylé, le tri(méth)acrylate de glycérol propoxylé, le tri(méth)acrylate de triméthylolpropane éthoxylé, le tri(méth)acrylate de triméthylolpropane propoxylé, le di(méth)acrylate d'esterdiol, le tri(méth)acrylate de tri(2-hydroxy éthyl)isocyanurate, l'hydroxypivalyl hydroxypivalate bis[6-(acryloyloxy)hexanoate] et leurs mélanges.

A titre d'exemple de dérivé d'acrylate polyfonctionnel de formule (I) répondant à ce troisième mode de réalisation, on peut citer ceux de la société SARTOMER sous la dénomination SR264 (polyéthylène glycol (300) diacrylate), SR454 (triacrylate de triméthylolpropane éthyoxylé (3)) ; ceux de la société MIWON SPECIALTY CHEMICAL sous la dénomination MIRAMER M340, M410, M500, M600 ou M231 ; ou encore ceux de la société IGM RESINS sous la dénomination PHOTOMER 4050, 4226, ou 4600, et également ceux de la société SIGMA-ALDRICH : le diacrylate de diéthylène glycol, le diacrylate de dipropylène glycol, le pentaacrylate de dipentaerythriol (DPPA), l'hexaacrylate de dipentaerythriol (DPHA).

Selon un quatrième mode de réalisation de l'invention, quels que soient les groupements R₁, R₂ et R₃ :
∘ A représente un groupement comprenant de 2 à 30 unités monomère, les unités monomère étant choisies dans le groupe constitué par les unités monomères époxydes,
esters, éthers, amines, acryliques, siloxanes et uréthanes,
∘ A comprenant p valences libres, p ayant une valeur allant de 1 à 20,
∘ étant entendu que les 1 à 20 radicaux X du dérivé d'acrylate de formule (I) sont identiques ou différents, de préférence identiques.

De manière particulièrement avantageuse, selon ce quatrième mode de réalisation, les unités monomères représentent plus de 50% en mole de A, de préférence plus de 60% en moles de A. Les unités monomères peuvent également représenter 100% en mol de A. Par ailleurs, les unités monomères de A sont avantageusement identiques, au sein du dérivé d'acrylate de formules (I).

De manière avantageuse, selon ce quatrième mode de réalisation, A représente un groupement qui est linéaire. Toutefois, A peut présenter des ramifications, de préférence lorsque les unités monomères sont des unités monomères uréthanes.

Selon ce quatrième mode de réalisation, A peut avantageusement représenter un groupement comprenant de 2 à 16, de préférence de 3 à 10 unités monomère, les unités monomère étant choisies dans le groupe constitué par les unités monomères époxydes, esters, éthers, amines, acryliques, siloxanes et uréthanes.

De manière avantageuse, selon ce quatrième mode de réalisation, A comprend p valences libres, p ayant une valeur allant de 2 à 20, de préférence de 2 à 15, de préférence de 2 à 10, de préférence de 2 à 8, de préférence de 2 à 6. En d'autres termes, le dérivé d'acrylate comprend préférentiellement de 2 à 20, de préférence de 2 à 15, de préférence de 2 à 10, de préférence de 2 à 8, de préférence de 2 à 6 radicaux X.

Selon ce quatrième mode de réalisation, la masse moléculaire du dérivé d'acrylate de formule (I) est avantageusement comprise dans un domaine allant de 250 à 15 000 g /mol, de préférence de 500 à 10 000 g/mol, de préférence encore de 800 à 8 000 g/mol.

Lorsque les unités monomères de A sont des unités monomères époxydes, le dérivé d'acrylate de formule (I) est avantageusement un « époxy (méth)acrylate ». Une description de tels composés peut être trouvée dans le livre : Radiation Curing : Coatings and Printing inks, Technical Basics, Applications and Trouble Shooting, ISBN 3-86630-907-4, Editeur : Vincentz Network GmbH & Co eKG, Hannovre, Auteurs : P.Glöckner, T.Jung, S.Struck, K. Studer, 2008, p.60-62. Ces composés peuvent être des dérivés d'époxy de bisphénol, d'époxy novolac, d'acides gras ou d'huiles époxydées (e.g. huile de soja époxydée, huile de ricin époxydée...), ou de tout autre oligomère ou polymère qui possède des fonctions époxy qui sont fonctionnalisées par l'acide (méth)acrylique afin d'obtenir les époxy (méth)acryliques précités, et qui peuvent être modifiées ou non.

Lorsque les unités monomères de A sont des unités monomères esters, le dérivé d'acrylate de formule (I) est avantageusement un « ester (méth)acrylate ». Une description de tels composés peut être trouvée Radiation Curing : Coatings and Printing inks, Technical Basics, Applications and Trouble Shooting, ISBN 3-86630-907-4, Editeur : Vincentz Network GmbH & Co eKG, Hannovre, Auteurs : P.Glöckner, T.Jung, S.Struck, K.Studer, 2008, p.65. Ces composés sont caractérisés par la présence de motifs ester -C(O)-O- dans leur structure et la présence de deux, ou plusieurs fonction (méth)acrylates. Ils peuvent contenir des éléments alkyles ou aryles. Ces molécules sont la plupart du temps préparées par estérification avec acide acrylique de fonctions hydroxyles portées par des polyesters polyols ou leurs dérivés. Une autre voie consiste en la réaction de groupes carboxyliques portés par des polyesters avec des acrylates d'hydroxyalkyles.

Lorsque les unités monomères de A sont des unités monomères éthers, le dérivé d'acrylate de formule (I) est avantageusement un « éther (méth)acrylate ». Une description de tels composés peut être trouvée Radiation Curing : Coatings and Printing inks, Technical Basics, Applications and Trouble Shooting, ISBN 3-86630-907-4, Editeur : Vincentz Network GmbH & Co eKG, Hannovre, Auteurs : P.Glöckner, T.Jung, S.Struck, K.Studer, 2008, p.65-67. Ces composés sont caractérisés par la présence de motifs éther -C-O- dans leur structure. Ils peuvent par exemple résulter de la polymérisation d'oxyde d'éthylène ou d'oxyde de propylène qui sont polymérisés avec, par exemple, pour molécule de base des molécules contenant une, deux, ou plusieurs fonctions hydroxyles telles que le triméthylol propane par exemple. Ces éther (méth)acrylates peuvent être modifiés par des fonctions amines à l'issue la plupart du temps d'une réaction de Michael entre des fonctions (méth)acrylates et une amine primaire ou secondaire.

Lorsque les unités monomères de A sont des unités monomères amines, le dérivé d'acrylate de formule (I) est avantageusement un « amine (méth)acrylate ». Une description de tels composés peut être trouvée Radiation Curing : Coatings and Radiation Curing : Coatings and Printing inks, Technical Basics, Applications and Trouble Shooting, ISBN 3-86630-907-4, Editeur : Vincentz Network GmbH & Co eKG, Hannovre, Auteurs : P.Glöckner, T.Jung, S.Struck, K.Studer, 2008, p.66. Ces composés peuvent être des oligomères contenant une fonction amine pour unité de répétition avec une, deux, ou plusieurs fonction acryliques, ou encore des oligomères basés sur des unités de répétition du type ester, éther, acrylique, silicone, uréthane, ayant des fonctions acryliques greffées et dont certaines ont été modifiée par des composés ayant des fonctions amines. Un exemple de préparation de tels composés peut être trouvé dans les documents WO2000044734, FR3022544 ou WO2008000696.

Lorsque les unités monomères de A sont des unités monomères acrylates, le dérivé d'acrylate de formule (I) est avantageusement un « acrylate (méth)acrylate ». Une description de tels composés peut être trouvée Radiation Curing : Coatings and Printing inks, Technical Basics, Applications and Trouble Shooting, ISBN 3-86630-907-4, Editeur : Vincentz Network GmbH & Co eKG, Hannovre, Auteurs : P.Glöckner, T.Jung, S.Struck, K.Studer, 2008, p.67. Ces composés se caractérisent en ce qu'ils sont obtenus par polymérisation de monomères acryliques afin d'obtenir des oligomères, des polymères ou des copolymères qui seront par la suite post greffé afin de porter sur leur structure une, deux, ou plusieurs fonctions (méth)acryliques. Les structures en question peuvent être linéaires, ramifiées, ou étoilées et contiennent donc une unité de répétition du type -CH₂-C(R)(C(O)-O-R')- avec R étant un hydrogène ou un alkyle ou un aryle et R' un groupement qui est le support ou non de la fonction (méth)acrylique). Un exemple de préparation de tels composés peut être trouvé dans le document WO201293465.

Lorsque les unités monomères de A sont des unités monomères siloxanes, le dérivé d'acrylate de formule (I) est avantageusement un « silicone (méth)acrylate ». Une description de tels composés peut être trouvée Radiation Curing : Coatings and Printing inks, Technical Basics, Applications and Trouble Shooting, ISBN 3-86630-907-4, Editeur : Vincentz Network GmbH & Co eKG, Hannovre, Auteurs : P.Glöckner, T.Jung, S.Struck, K. Studer, 2008, p.67-68. Ces composés sont caractérisés par la présence de motifs siloxane -Si(R)2-O- dans leur structure et la présence de une, deux, ou plusieurs fonctions (méth)acrylates (R pouvant être un alkyl ou un aryl). Plusieurs voies d'obtention sont décrites dans la littérature avec notamment les documents CA2288384 et EP1595909.

Lorsque les unités monomères de A sont des unités monomères uréthanes, le dérivé d'acrylate de formule (I) est avantageusement un « uréthane (méth)acrylate ». Une description de tels composés peut être trouvée Radiation Curing : Coatings and Printing inks, Technical Basics, Applications and Trouble Shooting, ISBN 3-86630-907-4, Editeur : Vincentz Network GmbH & Co eKG, Hannovre, Auteurs : P.Glöckner, T.Jung, S.Struck, K. Studer, 2008, p.62-64. Ces composés sont caractérisés par la présence de motif uréthane -N(H)-C(O)-O- dans leur structure et la présence de une, deux, ou plusieurs fonctions (méth)acrylates. Une voie de préparation simple consiste en la réaction de molécule contenant deux ou plusieurs fonctions isocyanates avec des molécules de type hydroxylalkylacrylates. Des molécules de constitution plus sophistiquées peuvent être obtenues par exemple par réaction de polyols qui peuvent eux-mêmes être composé d'alkyle, d'aryle, d'ester, d'éther..., être linéaires, branchés ou étoilés, et des molécules de diisocyanates en présence d'hydroxyalkylacrylates.

Il existe dans le commerce de nombreux dérivés d'acrylate de formule (I) répondant à ce quatrième mode de réalisation. A titre d'exemple, lorsque les unités monomères de A du dérivé d'acrylate de formule (I) sont des unités monomères époxydes, on peut citer ceux de la société SARTOMER sous la dénomination CN109 ou CN186, ou un de ceux de la société RAHN AG sous la dénomination GENORMER 2253 ou 2281, ou ceux de la société MIWON sous la dénomination MIRAMER PE210, ou PE310, ou ceux de la société IGM RESINS sous la dénomination PHOTOMER 3015, 3620 ou 3660. Lorsque les unités monomères de A du dérivé d'acrylate de formule (I) sont des unités monomères esters, on peut citer ceux de la société SARTOMER sous la dénomination CN203, CN291, ou CH2562, ou ceux de la société RAHN AG sous la dénomination GENOMER 3485, 3611, ou ceux de la société MIWON sous la dénomination MIRAMER PS3010, PS4500, ou P261 ; ou ceux de la société IGM RESINS sous la dénomination PHOTOMER 5432 ou 5450. Lorsque les unités monomères de A du dérivé d'acrylate de formule (I) sont des unités monomères éthers, on peut citer ceux de la société SARTOMER sous la dénomination diacrylate de tripropylène glycol (SR306), diacrylate de triétylène glycol (SR272), diacrylate de dipropylène glycole (SR508), ou un de ceux de la société RAHN AG sous la dénomination GENORMER 3364, 3480 ou 3457, ou ceux de la société IGM RESINS sous la dénomination PHOTOMER 5662 ou 5010. Lorsque les unités monomères de A du dérivé d'acrylate de formule (I) sont des unités monomères amines, on peut citer un de ceux de la société RAHN AG sous la dénomination GENOMER 5271, 5275, 5695, ou un de ceux de la société SARTOMER sous la dénomination CN890, ou encore un de ceux de la société MIWON sous la dénomination MIRAMER AS1000, LR3600 ou A102. Lorsque les unités monomères de A du dérivé d'acrylate de formule (I) sont des unités monomères acryliques, on peut citer un de ceux de la société SARTOMER sous la dénomination CN820, ou un de ceux de la société MIWON sous la dénomination MIRAMER SC9060, SC9211, S5242. Lorsque les unités monomères de A du dérivé d'acrylate de formule (I) sont des unités monomères siloxane, on peut citer un de ceux de la société SARTOMER sous la dénomination CN9800, ou un de ceux de la société ELKEM SILICONES sous la dénomination SILCOLEASE UV POLY110, UV ADD150, UV RCA 170, ou un de ceux de la société EVONIK sous la dénomination TEGO RC902, RC711, RC722, RC922, ou un de ceux de la société SHIN ETSU sous la dénomination X-22-164, X-22-2445, X-22-174. Lorsque les unités monomères de A du dérivé d'acrylate de formule (I) sont des unités monomères uréthanes, on peut citer ceux de la société SARTOMER sous la dénomination CN965 ou CN9002, ou un de ceux de la société MIWON sous la dénomination MIRAMER PU2100, PU2560 ou PU256NT, ou un de ceux de la société IGM RESINS sous la dénomination PHOTOMER 6010, 6019 ou 6720.

Avantageusement, quel que soit le mode de réalisation de l'invention, le co-agent de réticulation est choisi dans le groupe constitué par le diméthacrylate de zinc, diméthacrylate de magnésium, le diacrylate de zinc, le diacrylate de magnésium, le triméthylopropane triméthylacrylate, triméthylolproprane triacrylate, le 1,6-hexanbediol diacrylate, le 3-méthyl-1,5-pentanediol diacrylate, le 1,10-decanediol diacrylate, le tricyclodecanedimethanol diacrylate, le pentaerythritol tetraacrylate, l'éthylène glycol diméthacrylate, le 1,4-butanediol diméthacrylate, le 1,6-hexanediol diméthacrylate, le 1,10-decanediol diméthacrylate, le 1,3-butylène glycol diméthacrylate, le tricyclodecanedimethanol diméthacrylate et leurs mélanges, de préférence dans le groupe constitué par le diméthacrylate de zinc, diméthacrylate de magnésium, le diacrylate de zinc, le diacrylate de magnésium et leurs mélanges.

Le co-agent de réticulation peut également comprendre, alternativement ou en complément, un composé vinylique, qui peut être par exemple un composé vinyléther. De préférence le composé vinylique est choisi dans le groupe constitué par le trans-stilbène, le divinylbenzène, le trans,trans-2,6-diméthyl-2,4,6-octatriène, le dicyclopentadiène, le 3,7-diméthyl-1,3,6-octatriène (OCIMENE), les composés représentés par la formule générale (IV) : 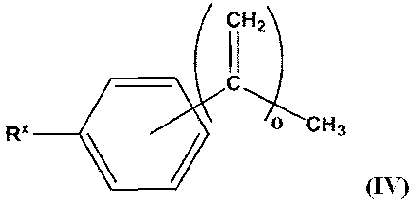
dans laquelle R^{x} représente un atome d'hydrogène ou un groupement alkyle de 1 à 9 atomes de carbone et o est un nombre entier compris entre 1 et 3,
et les composés représentés par la formule générale (V) : 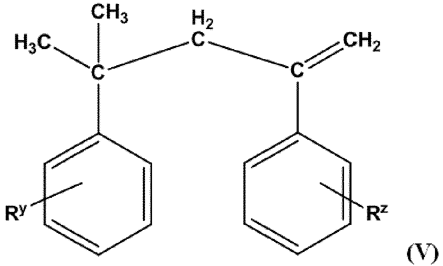
dans laquelle R^{y} et R^{z} peuvent être identiques ou différents et représentent un groupement alkyle de 1 à 4 atomes de carbone.

Comme composés représentés par la formule générale (IV), on peut citer l'α-méthyl styrène, l'ortho, méta, para diisopropényl benzène, le 1,2,4-triisopropényl benzène, le 1,3,5-triisopropényl benzène, le 3-isopropyl-ortho diisopropényl benzène, le 4-isopropyl-ortho diisopropényl benzène, le 4-isopropyl-m-diisopropényl benzène, le 5-isopropyl-m-diisopropényl benzène, le 2-isopropyl-p-diisopropényl benzène.

Comme composés représentés par la formule générale (V), on peut citer le 2,4-di (3-isopropylphényl)-4-méthyl-1 pentène, le 2,4-di (4-iso propylphényl) 4-méthyl-1 pentène, le 2-(3-isopropylphényl)-4-(4-isopropylphényl)-4-méthyl-1-pentène, le 2-(4-isopropylphényl)-4-(3-isopropylphényl)-4-méthyl-1-pentène, le 2,4-di(3-méthyl-phényl)-4-méthyl-1 pentène, le 2,4-di(4-méthylphényl)-4-méthyl-1 pentène.

Le méthacrylate de méthyle, le méthacrylate de lauryle, le méthacrylate d'allyle, le triacrylate de triméthylolpropane, le cyanurate de triallyle (TAC), l'isocyanurate de triallyle (TAIC), le phosphate de triallyle, le tétra-allyloxyéthane, le carbonate d'allyldiglycol, le trimellate de triallyle, le citrate de triallyle, l'adipate de diallyle, le téréphalate de diallyle, l'oxalate de diallyle, le fumarate de diallyle, le diméthacrylate d'éthylène-glycol et le méthacrylate de 2-hydroxyéthyle, peuvent également convenir comme co-agent de réticulation.

Le co-agent de réticulation peut également comprendre, alternativement ou en complément, un composé maléimide, par exemple choisi dans le groupe constitué par les composé de formule générale (VI) : 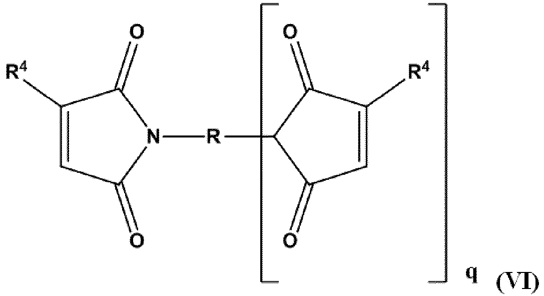 dans laquelle q est égal à 1 ou 2 et R est divalent ou trivalent et est choisi dans le groupe formé par les groupements aliphatiques acycliques ayant de 2 à 16 atomes de carbone, les groupements aliphatiques cycliques ayant de 5 à 20 atomes de carbone, les groupements aromatiques ayant de 6 à 18 atomes de carbone et les groupements alkyl aromatique (alkylaryl) ayant de 7 à 24 atomes de carbone, et ces groupements divalent ou trivalent peuvent contenir un ou plusieurs hétéroatomes d'oxygène, d'azote et/ou de soufre en remplacement à un ou plusieurs atomes de carbone et chaque R₄ est identique et représente un atome d'hydrogène ou un groupement alkyl ayant de 1 à 18 atomes de carbone.

Parmi les composés de formule générale (VI), les bismaléimides et les biscitraconimides sont avantageusement choisis.

Comme bismaléimide on peut citer le bismaléimide de N,N'-m-phénylène, le bismaléimide de N,N'-éthylène, bismaléimide de N,N'-hexaméthylène, bismaléimide de N,N'-dodécaméthylène, bismaléimide de N,N'-(2,2,4-triméthylhexaméthylène), bismaléimide de N,N'-(oxydipropylène), bismaléimide de N,N'-(aminodipropylène), bismaléimide de N,N'-(éthylènedioxydipropylène), bismaléimide de N,N' (1,4-cyclohexylène), bismaléimide N,N'(1,3-cyclohexylène), bismaléimide de N,N'-(méthylène 1,4-dicyclohexylène), bismaléimide de N,N'-(isopropylidène-1,4-dicyclohexylène, bismaléimide de N,N'-(oxy-1,4-dicyclohexylène), bismaléimide de N,N'-p-(phénylène), bismaléimide de N,N' -(o-phénylène), bismaléimide de N,N'-(1,3-naphthylène), bismaléimide de N,N'-(1,4-naphthylène), bismaléimide de N,N'-(1,5-naphthylène), bismaléimide de N,N'-(3,3'diméthyl-(4,4-diphénylène), bismaléimide de N,N'-(3,3-dichloro-4,4 biphénylène), bismaléimide de N,N'-(2,4-pyridyl), bismaléimide de N,N'-(2,6-pyridyl), bismaléimide de N,N'-(1,4 anthraquinonediyl), bismaléimide de N,N'-(m-tolylène), bismaléimide de N,N' (p-tolylène), bismaléimide de N,N'-(4,6-diméthyl-1,3-phénylène), bismaléimide de N,N'-(2,3-diméthyl-1,4-phénylène), bismaléimide de N,N'-(4,6-dichloro-1,3-phénylène), bismaléimide de N,N'-(5-chloro-1,3-phénylène), bismaléimide de N,N'-(5-hydroxy-1,3-phénylène), bismaléimide de N,N'-(5-méthoxy-1,3-phénylène), bismaléimide de N,N'-(m-xylylène), bismaléimide de N,N'-(p-xylylène), bismaléimide de N,N'-(méthylènedi-p-phénylène), bismaléimide de N,N'-(isopropylidènedi-p-phénylène), bismaléimide de N,N'-(oxydi-p-phénylène), bismaléimide de N,N'-(thiodi-p-phénylène), bismaléimide de N,N'-(dithiodi-p-phénylène), bismaléimide de N,N'-(sulfodi-p-phénylène), bismaléimide de N,N'-(carbonyldi-p-phénylène), α,α'-bis-(4-maléimodophényl)-méta-diisopropylbenzène, bismaléimide de α,α'-bis-(4-p-phénylène) et α,α'-bis-(4-maleimidophenyl)-para-diisopropylbenzène.

Comme biscitraconimides, on peut citer le biscitraconimide de 1,2-N,N'-diméthylène, le biscitraconimide de 1,2-N,N'-triméthylène, le biscitraconimide de 1,5-N,N'-(2-méthyl-pentaméthylène) et le biscitraconimide de N,N'-méthylphénylène).

Avantageusement, le taux du co-agent de réticulation, et de préférence le taux total de co-agent de réticulation, dans la composition du bandage selon l'invention, est compris dans un domaine allant de 1 à 150 pce, de préférence de 20 à 130 pce, de préférence encore de 40 à 100 pce, de préférence de 50 à 80 pce.

De manière particulièrement avantageuse, la quantité d'amorceur de polymérisation radicalaire dans la composition est comprise dans un domaine allant de 1 à 10% en poids, de préférence entre 1,25 et 8% en poids, de préférence entre 2 et 5% en poids, de préférence entre 3 et 4% en poids, par rapport au poids de co-agent de réticulation dans la composition.

### Soufre

Par ailleurs, la composition du bandage selon l'invention est avantageusement exempte de soufre en tant qu'agent de vulcanisation, ou en contenir moins de 0,5 pce, de préférence moins de 0,3 pce, de préférence moins de 0,2 pce et de préférence moins de 0,1 pce. Le soufre peut être du soufre moléculaire ou provenir d'un agent donneur de soufre, tel que les alkyl phénol disulfures (APDS).

### II-3.4 Additifs divers

Les compositions de caoutchouc du bandage selon l'invention peuvent comporter optionnellement également tout ou partie des additifs usuels habituellement utilisés dans les compositions d'élastomères pour bandage en caoutchouc, comme par exemple des plastifiants (tels que des huiles plastifiantes et/ou des résines plastifiantes), des charges (renforçantes ou non renforçantes, autres que celles précitées), des pigments, des agents de protection tels que cires anti-ozone, anti-ozonants chimiques, anti-oxydants, des agents anti-fatigue, des résines renforçantes (telles que décrites par exemple dans la demande WO 02/10269).

### II-4 Préparation des compositions de caoutchouc et des bandages

Les compositions des bandages conformes à l'invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 minutes.

De telles phases ont été décrites par exemple dans les demandes EP 0 501 227 A, EP 0 735 088 A, EP 0 810 258 A, WO 00/05300 ou WO 00/05301.

La composition finale ainsi obtenue est ensuite calandrée par exemple sous la forme d'une feuille ou d'une plaque, notamment pour une caractérisation au laboratoire.

La composition du bandage peut être soit à l'état cru (avant réticulation ou vulcanisation), soit à l'état cuit (après réticulation ou vulcanisation).

La réticulation de la composition peut être conduite de manière connue de l'homme du métier, par exemple à une température comprise entre 130°C et 200°C, sous pression.

En particulier, le bandage pour roue destinée à équiper un véhicule transportable manuellement peut être fabriqué selon tout procédé connu de l'homme de l'art. De préférence, le bandage peut être fabriqué sous pression par moulage compression à une pression comprise entre 12 et 24 bars, et une température comprise entre 130°C et 200°C. Ce bandage a ensuite été monté sur un moyeu ou une jante, selon les techniques connues de l'homme du métier, formant ainsi une roue qui a ensuite été monté sur une trottinette.

D'autres procédés de fabrication de roues conformes à l'invention peuvent être trouvés notamment dans les documents US 3,548,812, FR 2 800 295 ou CN 104816592 par exemple.

### III- MODES DE REALISATIONS PREFEREES

Au vu de ce qui précède, les modes de réalisations préférés de l'invention sont décrits ci-dessous :
**A.** Bandage pour roue destinée à équiper un véhicule transportable manuellement, comprenant une composition à base d'au moins un élastomère diénique, au moins une charge renforçante, et un système de réticulation comportant au moins un amorceur de polymérisation radicalaire, et un co-agent de réticulation choisi dans le groupe constitué par les composés (méth)acrylates, les composés maléimides, les composés allyliques, les composés vinyliques et leurs mélanges.
**B.** Bandage selon le mode de réalisation A, dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères, de préférence choisi dans le groupe constitué par les polyisoprènes de synthèse, le caoutchouc naturel et leurs mélanges.
**C.** Bandage selon l'un quelconque des modes de réalisation précédents, dans lequel le taux de charge renforçante dans la composition est compris dans un domaine allant de 1 à 200 pce, de préférence de 5 à 80 pce, de préférence encore de 10 à 50 pce.
**D.** Bandage selon l'un quelconque des modes de réalisation précédents, dans lequel la charge renforçante comprend du noir de carbone, une charge renforçante inorganique ou un de leurs mélanges.
**E.** Bandage selon le mode de réalisation 4, dans lequel la charge renforçante comprend majoritairement, de préférence exclusivement, du noir de carbone.
**F.** Bandage selon l'un quelconque des modes de réalisation précédents, dans lequel le taux d'amorceur de polymérisation radicalaire, de préférence de peroxyde, dans la composition est compris dans un domaine allant de 0,1 à 10 pce, de préférence de 0,5 à 5 pce, de préférence encore de 1 à 4 pce.
**G.** Bandage selon l'un quelconque des modes de réalisation précédents, dans lequel l'amorceur de polymérisation radicalaire est choisi dans le groupe constitué par les peroxydes, les composés azoïques, les systèmes rédox (oxydo-réduction) et leurs mélanges.
**H.** Bandage selon l'un quelconque des modes de réalisation précédents, dans lequel l'amorceur de polymérisation radicalaire est un peroxyde organique choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et leurs mélanges, de préférence dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et leurs mélanges.
**I.** Bandage selon l'un quelconque des modes de réalisation précédents, dans lequel le taux du co-agent de réticulation dans la composition est compris dans un domaine allant de 1 à 150 pce, de préférence de 20 à 130 pce, de préférence encore de 40 à 100 pce, de préférence de 50 à 80 pce.
J. Bandage selon l'un quelconque des modes de réalisation précédents, dans lequel la quantité d'amorceur de polymérisation radicalaire dans la composition est comprise dans un domaine allant de 1 à 10% en poids, de préférence entre 1,25 et 8% en poids, de préférence entre 2 et 5% en poids, de préférence entre 3 et 4% en poids, par rapport au poids de co-agent de réticulation dans la composition.
**K.** Bandage selon l'un quelconque des modes de réalisation précédents, dans lequel le co-agent de réticulation comprend un dérivé d'acrylate de formule (I) :

   **[X]p A** **(I)**

   dans laquelle,
   - [X]p correspond à un radical de formule (II) : 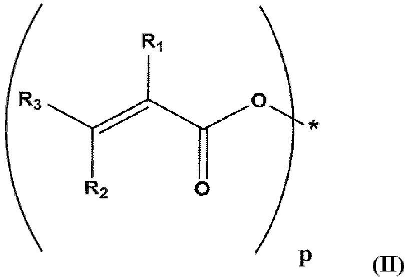 dans laquelle,
      ∘ R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
      ∘ (*) représente le point d'attachement du radical de formule (II) à A,
   - A représente un atome appartenant au groupe constitué par les métaux alcalino-terreux ou les métaux de transition, un atome de carbone, un groupement hydrocarboné en C₁-C₃₀ éventuellement interrompu et/ou substitué par un ou plusieurs hétéroatome, ou un groupement comprenant de 2 à 30 unités monomère, les unités monomère étant choisies dans le groupe constitué par les unités monomères époxydes, esters, éthers, amines, acryliques, siloxanes et uréthanes,
   - A comprenant p valences libres, p ayant une valeur allant de 1 à 20,
   - étant entendu que les 1 à 20 radicaux X sont identiques ou différents.
**L.** Bandage selon le mode de réalisation K, dans lequel R₁, R₂ et R₃ représentent indépendamment un atome d'hydrogène ou un groupe méthyle.
**M.** Bandage selon l'un quelconque des modes de réalisation K à L, dans lequel R₁, R₂ et R₃ représentent chacun un atome d'hydrogène.
**N.** Bandage selon l'un quelconque des modes de réalisation K à L, dans lequel R₁ représente un groupe méthyle et R₂ et R₃ représentent chacun un atome d'hydrogène.
**O.** Bandage selon l'un quelconque des modes de réalisation K à N, dans lequel dans le dérivé d'acrylate de formule (I) :
   - A représente un atome appartenant au groupe constitué par les métaux alcalino-terreux ou les métaux de transition, un atome de carbone ou un groupement hydrocarboné en C₁-C₁₃,
   - A comprenant p valences libres, p ayant une valeur allant de 2 à 4,
   - étant entendu que les 2 à 4 radicaux X sont identiques ou différents.
**P.** Bandage selon l'un quelconque des modes de réalisation K à O, dans lequel A représente un atome choisi dans le groupe constitué par Zn et Mg.
**Q.** Bandage selon l'un quelconque des modes de réalisation K à P, dans lequel dérivé d'acrylate de formule (I) est un dérivé du diacrylate de zinc sous la forme d'un sel de zinc de formule (III) : 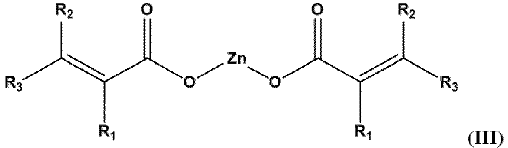 dans laquelle R₁, R₂ et R₃ représentent indépendamment les uns des autres un atome d'hydrogène ou un groupe hydrocarboné en C₁-C₇ choisi parmi les groupes alkyles linéaires, ramifiés ou cycliques, les groupes aralkyles, les groupes alkylaryles et les groupes aryles, et éventuellement interrompus par un ou plusieurs hétéroatomes, R₂ et R₃ pouvant former ensemble un cycle non aromatique.
**R.** Bandage selon l'un quelconque des modes de réalisation K à O, dans lequel A représente un groupement hydrocarboné en C₁-C₁₃ choisi dans le groupe constitué par les radicaux suivants : 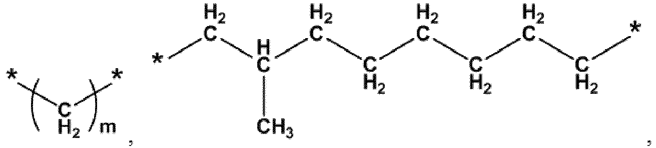 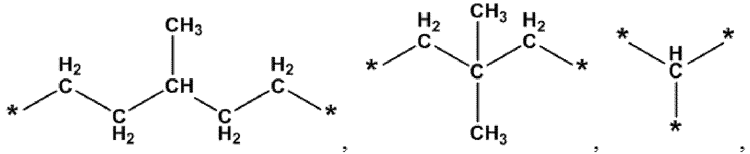 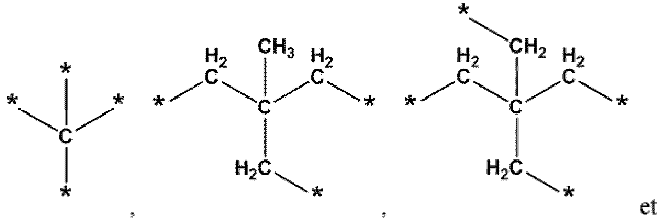 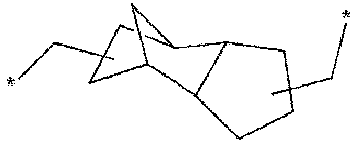 dans lesquels, m est un nombre entier allant de 1 à 13, de préférence de 6 à 10, et (*) représente le point d'attachement de A au radical de formule (II).
**S.** Bandage selon l'un quelconque des modes de réalisation K à N, dans lequel dans le dérivé d'acrylate de formule (I) :
   - A représente un groupement hydrocarboné en C₁-C₃₀ choisi parmi les groupes alkyles, linéaires, ramifiés ou cycliques, et éventuellement interrompus et/ou substitués par un ou plusieurs hétéroatomes,
   - A comprenant p valences libres, p valant 1.
**T.** Bandage selon l'un quelconque des modes de réalisation K à N, dans lequel dans le dérivé d'acrylate de formule (I) :
   - A représente un groupement hydrocarboné en C₄-C₃₀, linéaire, ramifié ou cyclique, interrompu et/ou substitué par un ou plusieurs hétéroatomes,
   - A comprenant p valences libres, p ayant une valeur allant de 2 à 6,
   - étant entendu que les 2 à 6 radicaux X sont identiques ou différents.
**U.** Bandage selon l'un quelconque des modes de réalisation K à N, dans lequel dans le dérivé d'acrylate de formule (I) :
   - A représente un groupement comprenant de 2 à 30 unités monomère, les unités monomère étant choisies dans le groupe constitué par les unités monomères époxydes, esters, éthers, amines, acryliques, siloxanes et uréthanes,
   - A comprenant p valences libres, p ayant une valeur allant de 1 à 20,
   - étant entendu que les 1 à 20 radicaux X sont identiques ou différents.
**V.** Bandage selon l'un quelconque des modes de réalisation K à N, dans lequel le co-agent de réticulation est choisi dans le groupe constitué par le diméthacrylate de zinc, diméthacrylate de magnésium, le diacrylate de zinc, le diacrylate de magnésium, le triméthylopropane triméthylacrylate, triméthylolproprane triacrylate, le 1,6-hexanbediol diacrylate, le 3-méthyl-1,5-pentanediol diacrylate, le 1,10-decanediol diacrylate, le tricyclodecanedimethanol diacrylate, le pentaerythritol tetraacrylate, l'éthylène glycol diméthacrylate, le 1,4-butanediol diméthacrylate, le 1,6-hexanediol diméthacrylate, le 1,10-decanediol diméthacrylate, le 1,3-butylène glycol diméthacrylate, le tricyclodecanedimethanol diméthacrylate et leurs mélanges, de préférence dans le groupe constitué par le diméthacrylate de zinc, diméthacrylate de magnésium, le diacrylate de zinc, le diacrylate de magnésium et leurs mélanges.
**W.** Bandage selon l'un quelconque des modes de réalisation précédents, dans lequel la composition ne contient pas de soufre moléculaire ou d'agent donneur de soufre en tant qu'agent de vulcanisation ou en contient moins de 0,5 pce.
**X.** Bandage selon l'un quelconque des modes de réalisation précédents, dans lequel le véhicule transportable manuellement est choisi dans le groupe constitué par les trottinettes, les patins à roulettes, les patins à roulettes en ligne, les planches à roulettes, les monoroues, les gyropodes, les planches gyroscopiques, de préférence le véhicule transportable manuellement est une trottinette.
**Y.** Bandage selon l'un quelconque des modes de réalisation précédents, dans lequel le véhicule transportable manuellement a une masse inférieure à 42 kg, de préférence comprise dans un domaine allant de 0,2 à 30 kg, de préférence de 0,5 à 20 kg, de préférence de 1 à 15 kg.
**Z.** Bandage selon l'un quelconque des modes de réalisation précédents, ayant une dimension inférieure ou égale à 16 pouces, de préférence comprise dans un domaine allant de 2 à 16 pouces, de préférence de 6 à 12 pouces.

**AA.** Bandage selon l'un quelconque des modes de réalisation précédents, dans lequel la composition selon l'un quelconque des modes de réalisation A à Z est présente au moins dans la bande de roulement dudit bandage.
**BB.** Bandage selon l'un quelconque des modes de réalisation précédents, ledit bandage étant un bandage non pneumatique, ou bandage pneumatique, de préférence un bandage non pneumatique.
**CC.** Roue de véhicule transportable manuellement équipée d'un bandage selon l'un quelconque des modes de réalisation A à BB.
**DD.** Véhicule transportable manuellement équipée d'au moins une roue selon le mode de réalisation CC.
**EE.** Véhicule transportable manuellement selon le mode de réalisation DD, ledit véhicule étant une trottinette.

### IV- EXEMPLES

### IV-1 Préparation des compositions et des bandages

Dans les exemples qui suivent, les compositions caoutchouteuses ont été réalisées comme décrit au point II.4 ci-dessus. En particulier, la phase « non-productive » a été réalisée dans un mélangeur de 7,8 litres pendant 4,5 minutes, pour une vitesse moyenne de palettes de 50 tours par minutes jusqu'à atteindre une température maximale de tombée de 160°C. La phase « productive » a été réalisée dans un outil à cylindre à 30°C pendant 5 minutes.

La réticulation de la composition a été conduite à une température de 160°C, sous pression 16 bars par moulage compression pour obtenir un bandage non pneumatique de 200 mm de diamètre externe, 40 mm de largeur et de 25 mm d'épaisseur au centre du profil. Ce bandage a ensuite été monté sur une roue, selon les techniques connues de l'homme du métier avant d'être soumis à différents tests et mesures.

### IV-2 Mesures et tests utilisés

La performance d'adhérence a été évaluée par la mesure d'un temps au tour sur une piste circulaire délimitée par deux anneaux concentriques de 5 et 7 m de diamètre, avec un sol en béton poli préalablement arrosé pour obtenir un film d'eau d'1 mm. Les tests ont été réalisé sur une trottinette électrique de puissance 350 W équipée de roue avec des bandages préparés au point IV-1 ci-dessus. Plus le temps au tour est faible, plus la performance d'adhérence est bonne.

La performance de résistance au roulement a été évaluée par la mesure d'une distance d'arrêt d'un tambour sur lequel le bandage monté sur roue a été placée. Pour cette mesure la bande de roulement a été mise en contact d'un tambour de diamètre 1 m, avec une force d'appui de 500 N. Le tambour a été mis en rotation jusqu'à atteindre une vitesse stabilisée de 40 km/h. Le moteur du tambour a alors été débrayé : la distance parcourue par la bande de roulement sans couple imposé a été mesurée jusqu'à l'arrêt total du tambour. Plus la distance parcourue est grande, plus la performance de résistance au roulement est bonne.

### IV-3 Essais de compositions de caoutchouc

Les exemples présentés ci-dessous ont pour objet de comparer le compromis de performance entre la résistance au roulement et l'adhérence sur sol mouillé de quatre compositions conformes à la présente invention (C1 à C4) avec deux compositions témoin (T1 et T2).

La composition témoin T1 sert de référence. Les résultats de performance de résistance au roulement et d'adhérence sur sol mouillé sont exprimés en pourcentage base 100 par rapport à la composition témoin T 1. Un résultat supérieur à 100 indique une performance améliorée, à savoir respectivement une résistance au roulement réduite et une meilleure adhérence sur sol mouillé.

La composition témoin T2 est une composition contrôle expliquant un résultat connu de l'homme du métier selon lequel, l'amélioration de la résistance au roulement s'accompagne classiquement d'une dégradation de l'adhérence sur sol mouillé.

Les compositions C1 à C4, sont différentes compositions, toutes conformes à l'invention, pour lesquelles il a été observé de manière inattendue, que l'amélioration de la résistance au roulement ne s'accompagne pas d'une dégradation de l'adhérence. Le compromis des performances de résistance au roulement et d'adhérence sur sol mouillé est donc fortement amélioré.

Le Tableau 1 présente les compositions testées (en pce), ainsi que les résultats obtenus.

**Tableau 1**

| | **T1** | **T2** | **C1** | **C2** | **C3** | **C4** | **C5** | **C6** |
|---|---|---|---|---|---|---|---|---|
| SBR 1 (1) | 67 | - | - | - | - | - | - | - |
| SBR 2 (2) | 33 | - | - | - | - | - | - | - |
| NR (3) | - | 35 | 100 | 100 | 88 | 88 | 100 | 100 |
| BR (4) | - | 65 | - | - | 12 | 12 | - | - |
| Peroxyde (5) | - | - | 2,5 | 2,5 | 2,4 | 2,4 | 2,5 | 2,5 |
| Coagent acrylate 2 (6) | - | - | 53 | 75 | 65 | 61 | 53 | 53 |
| Coagent acrylate 3 (7) | - | - | - | - | - | 3.7 | - | - |
| Silice (8) | 129 | - | - | - | 30 | 30 | - | - |
| Silane (9) | 16 | - | - | - | 3,4 | 3,4 | - | - |
| DPG (10) | 2,3 | - | - | - | - | - | - | - |
| Noir de carbone 1 (11) | - | - | 20 | 20 | - | - | - | 30 |
| Noir de carbone 2 (12) | - | - | - | - | 1 | 1 | - | - |
| Noir de carbone 3 (13) | - | 30 | - | - | - | - | 20 | - |
| Huile 1 (14) | - | 2 | - | - | - | - | - | - |
| Huile 2 (15) | 7 | - | - | - | - | - | - | - |
| Huile 3 (16) | 23 | - | - | - | - | - | - | - |
| Résine (17) | 50 | - | - | - | - | - | - | - |
| Cire anti-ozone (18) | 2,8 | - | - | - | - | - | - | - |
| Antioxydant 1 (19) | 1,8 | 1 | - | - | 1 | 1 | - | - |
| Antioxydant 2 (20) | 4,2 | 3 | - | - | - | - | - | - |
| ZnO (21) | 3 | 4 | - | - | 4 | - | - | - |
| Acide stéarique (22) | 3 | 1 | - | - | 2 | - | - | - |
| Soufre | 1,5 | 2,6 | - | - | - | - | - | - |
| Accélérateur (23) | 3,9 | 2,8 | - | - | - | - | - | - |
| | | | | | | | | |
| Résistance au roulement | 100 | 263 | 321 | 369 | 390 | 379 | 358 | 319 |
| Adhérence sur sol mouillé | 100 | 79 | 101 | 103 | 101 | 103 | 98 | 106 |

| | | | | | | | | |
|---|---|---|---|---|---|---|---|---|
| (1) SBR1 : SBR avec 27% de motif styrène, et 17,5% de motif 1,2 et 22% de motif 1,4-cis de la partie butadiénique (Tg = -44°C) (2) SBR2 : SBR fonctionnalisé en bout de chaîne par une fonction silanol SiOH, avec 15% de motif styrène, 20% de motif 1,2 et 26% de motif 1,4-cis de la partie butadiénique (Tg de -65°C) (3) Caoutchouc naturel (4) Copolymère de butadiène avec 0,5% de motif 1,2 et 97% de 1,4-cis (Tg = -108°C) (5) Peroxyde de dicumyle (« Dicup DCP » de la société Arkema) (6) Diméthacrylate de zinc (ZDMA) (« Dymalink 634 » de la société Cray Valley) (7) Diacrylate de zinc (ZDA) (« Dymalink 633 » de la société Cray Valley) (8) Silice (« Zeosil 1165MP » de la société Solvay) (9) Silane triethoxysilylpropyltetrasulfure (« Si69 » de la société Evonik) (10) 1,3-Diphenylguanidine (DPG) de la société Konimpex (11) Noir de carbone N234 (dénomination selon la norme ASTM D-1765) (12) Noir de carbone N650 (dénomination selon la norme ASTM D-1765) (13) Noir de carbone N683 (dénomination selon la norme ASTM D-1765) (14) Huile paraffinique (« Tudalen 1968 » de la société Klaus Dahleke) (15) Huile de tournesol oléique (« Agripure-80 » de la société Cargill) (16) Huile d'extension paraffinique MES/HPD (Tg = -60°C) présente dans le SBR1 (17) Résine d'hydrocarbure de pétrole (Tg = 52°C, « Escorez 5000 series » de la société Exxon Mobil) (18) Cire anti-oxydante (« Cera SER AO 32 » de la société SER Wax Industry) (19) 2,2,4-triméthyl-1,2-dihydroquinoline (« Pilnox TDQ » de la société Nocil) (20) n-(1,3-diméthylbutyl)-n'-phényl-p-phénylènediamine (« Vulkanox 4020/LG » de la société Lanxess) (21) Oxyde de zinc (grade industriel - société Umicore) (22) Stéarine (« Pristerene 4931 » de la société Uniqema) (23) N-cyclohexylbenzothiazole-2-sulfénamide (« Rubenamid C » de la société Général Quimica) | | | | | | | | |

## Revendications

1. Bandage pour roue destinée à équiper un véhicule transportable manuellement, comprenant une composition à base d'au moins un élastomère diénique, au moins une charge renforçante, et un système de réticulation comportant au moins un amorceur de polymérisation radicalaire, et un co-agent de réticulation choisi dans le groupe constitué par les composés (méth)acrylates, les composés maléimides, les composés allyliques, les composés vinyliques et leurs mélanges.

2. Bandage selon la revendication 1, dans lequel l'élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères, de préférence choisi dans le groupe constitué par les polyisoprènes de synthèse, le caoutchouc naturel et leurs mélanges.

3. Bandage selon l'une quelconque des revendications précédentes, dans lequel le taux de charge renforçante dans la composition est compris dans un domaine allant de 1 à 200 pce, de préférence de 5 à 80 pce, de préférence encore de 10 à 50 pce.

4. Bandage selon l'une quelconque des revendications précédentes, dans lequel le taux d'amorceur de polymérisation radicalaire, de préférence de peroxyde, dans la composition est compris dans un domaine allant de 0,1 à 10 pce, de préférence 0,5 à 5 pce.

5. Bandage selon l'une quelconque des revendications précédentes, dans lequel l'amorceur de polymérisation radicalaire est choisi dans le groupe constitué par les peroxydes, les composés azoïques, les systèmes rédox (oxydo-réduction) et leurs mélanges.

6. Bandage selon l'une quelconque des revendications précédentes, dans lequel le taux du co-agent de réticulation dans la composition est compris dans un domaine allant de 1 à 150 pce, de préférence de 20 à 130 pce.

7. Bandage selon l'une quelconque des revendications précédentes, dans lequel la quantité d'amorceur de polymérisation radicalaire dans la composition est comprise dans un domaine allant de 1 à 10% en poids, de préférence entre 1,25 et 8% en poids, par rapport au poids de co-agent de réticulation dans la composition.

8. Bandage selon l'une quelconque des revendications précédentes, dans lequel le co-agent de réticulation comprend un dérivé d'acrylate de formule (I) :
**[X]ₚ A** **(I)**
dans laquelle,
- [X]p correspond à un radical de formule (II) : 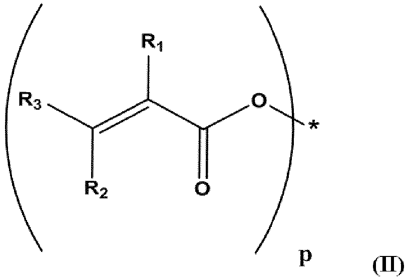 dans laquelle,
∘ R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
∘ (*) représente le point d'attachement du radical de formule (II) à A,
- A représente un atome appartenant au groupe constitué par les métaux alcalino-terreux ou les métaux de transition, un atome de carbone, un groupement hydrocarboné en C₁-C₃₀ éventuellement interrompu et/ou substitué par un ou plusieurs hétéroatome, ou un groupement comprenant de 2 à 30 unités monomère, les unités monomère étant choisies dans le groupe constitué par les unités monomères époxydes, esters, éthers, amines, acryliques, siloxanes et uréthanes,
- A comprenant p valences libres, p ayant une valeur allant de 1 à 20,
- étant entendu que les 1 à 20 radicaux X sont identiques ou différents.

9. Bandage selon l'une quelconque des revendications précédentes, dans lequel le véhicule transportable manuellement est choisi dans le groupe constitué par les trottinettes, les patins à roulettes, les patins à roulettes en ligne, les planches à roulettes, les monoroues, les gyropodes, les planches gyroscopiques, de préférence le véhicule transportable manuellement est une trottinette.

10. Bandage selon l'une quelconque des revendications précédentes, dans lequel le véhicule transportable manuellement a une masse inférieure à 42 kg, de préférence comprise dans un domaine allant de 0,2 à 30 kg.

11. Bandage selon l'une quelconque des revendications précédentes, ayant une dimension inférieure ou égale à 16 pouces, de préférence comprise dans un domaine allant de 2 à 16 pouces.

12. Bandage selon l'une quelconque des revendications précédentes, dans lequel la composition définie à l'une quelconque des revendications 1 à 8 est présente au moins dans la bande de roulement dudit bandage.

13. Bandage selon l'une quelconque des revendications précédentes, ledit bandage étant un bandage non pneumatique, ou un bandage pneumatique, de préférence un bandage non pneumatique.

14. Roue de véhicule transportable manuellement équipée d'un bandage selon l'une quelconque des revendications 1 à 13.

15. Véhicule transportable manuellement équipé d'au moins une roue selon la revendication 14.

## Patentansprüche

1. Reifen für ein Rad, das dazu bestimmt ist, ein manuell transportierbares Fahrzeug auszustatten, umfassend eine Zusammensetzung auf Basis mindestens eines Dienelastomers, mindestens einen verstärkenden Füllstoff und ein Vernetzungssystem, das mindestens einen Initiator für die radikalische Polymerisation beinhaltet, und ein Co-Vernetzungsmittel, das aus der Gruppe ausgewählt ist, die aus den (Meth)acrylatverbindungen, den Maleinimidverbindungen, den Allylverbindungen, den Vinylverbindungen und ihren Mischungen besteht.

2. Reifen nach Anspruch 1, wobei das Dienelastomer aus der Gruppe ausgewählt ist, die aus den Pulybutadienen, den synthetischen Polyisoprenen, dem Naturkautschuk, den Butadien-Copolymeren, den Isopren-Copolymeren und den Mischungen dieser Elastomere besteht, bevorzugt aus der Gruppe ausgewählt ist, die aus den synthetischen Polyisoprenen, dem Naturkautschuk und ihren Mischungen besteht.

3. Reifen nach einem der vorhergehenden Ansprüche, wobei der Gehalt an verstärkendem Füllstoff in der Zusammensetzung in einem Bereich von 1 bis 200 phr, bevorzugt von 5 bis 80 phr, noch bevorzugter von 10 bis 50 phr liegt.

4. Reifen nach einem der vorhergehenden Ansprüche, wobei der Gehalt an dem Initiator für die radikalische Polymerisation, bevorzugt Peroxid, in der Zusammensetzung in einem Bereich von 0,1 bis 10 phr, bevorzugt von 0,5 bis 5 phr liegt.

5. Reifen nach einem der vorhergehenden Ansprüche, wobei der Initiator für die radikalische Polymerisation aus der Gruppe ausgewählt ist, die aus den Peroxiden, den Azoverbindungen, den Redoxsystemen (Oxidations-Reduktions-Systemen) und ihren Mischungen besteht.

6. Reifen nach einem der vorhergehenden Ansprüche, wobei der Gehalt an Co-Vernetzungsmittel in der Zusammensetzung in einem Bereich von 1 bis 150 phr, bevorzugt von 20 bis 130 phr liegt.

7. Reifen nach einem der vorhergehenden Ansprüche, wobei die Menge des Initiators für die radikalische Polymerisation in der Zusammensetzung in einem Bereich von 1 bis 10 Gew.-%, bevorzugt zwischen 1,25 und 8 Gew.-%, bezogen auf das Gewicht des Co-Vernetzungsmittels in der Zusammensetzung liegt.

8. Reifen nach einem der vorhergehenden Ansprüche, wobei das Co-Vernetzungsmittel ein Acrylatderivat mit der Formel (I) umfasst:
**[X]ₚ A** **(I)**
in der,
- [X]p einem Rest mit der Formel (II) entspricht: 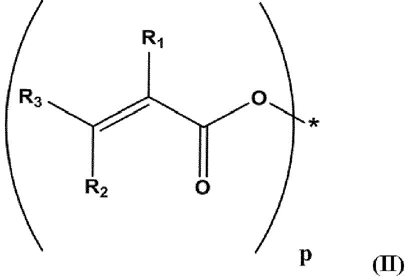 in der,
∘ R₁, R₂ und R₃ unabhängig für ein Wasserstoffatom oder eine C₁-C₈-Kohlenwasserstoffgruppe stehen, die aus der Gruppe ausgewählt ist, die aus den geradkettigen, verzweigten oder ringförmigen Alkylgruppen, den Alkylarylgruppen, den Arylgruppen und den Aralkylen besteht, und gegebenenfalls durch ein oder mehrere Heteroatome unterbrochen sind, wobei R₂ und R₃ zusammen einen nichtaromatischen Ring bilden können,
∘ (*) für den Anbindungspunkt des Rests mit der Formel (II) an A steht,
- A für ein Atom, das der aus den Erdalkalimetallen und den Übergangsmetallen bestehenden Gruppe angehört, ein Kohlenstoffatom, eine C₁-C₃₀-Kohlenwasserstoffgruppe, die gegebenenfalls durch ein oder mehrere Heteroatome unterbrochen und/oder substituiert ist, oder eine 2 bis 30 Monomereinheiten umfassende Gruppe steht, wobei die Monomereinheiten aus der Gruppe ausgewählt sind, die aus den Epoxid-, Ester-, Ether-, Amin-, Acryl-, Siloxan- und Urethan-Monomereinheiten besteht,
- A p freie Valenzen umfasst, wobei p einen Wert im Bereich von 1 bis 20 hat,
- mit der Maßgabe, dass die 1 bis 20 Reste X gleich oder verschieden sind.

9. Reifen nach einem der vorhergehenden Ansprüche, wobei das manuell transportable Fahrzeug aus der Gruppe ausgewählt ist, die aus den Tretrollern, den Rollschuhen, den Inline-Skates, den Skateboards, den Einrädern, den Gyropoden, den Hoverboards besteht, das manuell transportable Fahrzeug bevorzugt ein Tretroller ist.

10. Reifen nach einem der vorhergehenden Ansprüche, wobei das manuell transportable Fahrzeug eine Masse hat, die weniger als 42 kg beträgt, bevorzugt in einem Bereich von 0,2 bis 30 kg liegt.

11. Reifen nach einem der vorhergehenden Ansprüche, der eine Größe hat, die kleiner oder gleich 16 Zoll ist, bevorzugt in einem Bereich von 2 bis 16 Zoll liegt.

12. Reifen nach einem der vorhergehenden Ansprüche, wobei die in einem der Ansprüche 1 bis 8 definierte Zusammensetzung mindestens in dem Laufstreifen des Reifens vorhanden ist.

13. Reifen nach einem der vorhergehenden Ansprüche, wobei der Reifen ein Vollreifen oder ein Luftreifen ist, bevorzugt ein Vollreifen ist.

14. Rad für ein manuell transportables Fahrzeug, das mit einem Reifen nach einem der Ansprüche 1 bis 13 ausgestattet ist.

15. Manuell transportables Fahrzeug, das mit mindestens einem Rad nach Anspruch 14 ausgestattet ist.

## Claims

1. Tyre for a wheel intended to equip a manually transportable vehicle, comprising a composition based on at least one diene elastomer, at least one reinforcing filler, and a crosslinking system comprising at least one radical polymerization initiator, and a cocrosslinking agent selected from the group consisting of (meth)acrylate compounds, maleimide compounds, allyl compounds, vinyl compounds and their mixtures.

2. Tyre according to Claim 1, wherein the diene elastomer is selected from the group consisting of polybutadienes, synthetic polyisoprenes, natural rubber, butadiene copolymers, isoprene copolymers and the mixtures of these elastomers, preferably selected from the group consisting of synthetic polyisoprenes, natural rubber and their mixtures.

3. Tyre according to either one of the preceding claims, wherein the content of reinforcing filler in the composition is within a range extending from 1 to 200 phr, preferably from 5 to 80 phr, more preferably from 10 to 50 phr.

4. Tyre according to any one of the preceding claims, wherein the content of radical polymerization initiator, preferably of peroxide, in the composition is within a range extending from 0.1 to 10 phr, preferably from 0.5 to 5 phr.

5. Tyre according to any one of the preceding claims, wherein the radical polymerization initiator is selected from the group consisting of peroxides, azo compounds, redox (oxidation/reduction) systems and their mixtures.

6. Tyre according to any one of the preceding claims, wherein the content of the cocrosslinking agent in the composition is within a range extending from 1 to 150 phr, preferably from 20 to 130 phr.

7. Tyre according to any one of the preceding claims, wherein the amount of radical polymerization initiator in the composition is within a range extending from 1% to 10% by weight, preferably between 1.25% and 8% by weight, with respect to the weight of cocrosslinking agent in the composition.

8. Tyre according to any one of the preceding claims, wherein the cocrosslinking agent comprises an acrylate derivative of formula (I):
**[X]ₚ A** **(I)**
wherein:
- **[X]ₚ** corresponds to a radical of formula (II): 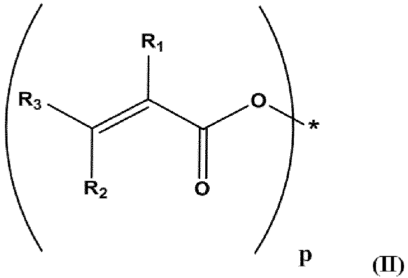 wherein:
∘ R₁, R₂ and R₃ independently represent a hydrogen atom or a C₁-C₈ hydrocarbon group selected from the group consisting of alkyl groups which are linear, branched or cyclic, alkylaryl groups, aryl groups and aralkyls, and which are optionally interrupted by one or more heteroatoms, it being possible for R₂ and R₃ together to form a non-aromatic ring,
∘ (*) represents the point of attachment of the radical of formula (II) to A,
- A represents an atom belonging to the group consisting of alkaline earth metals and transition metals, a carbon atom, a C₁-C₃₀ hydrocarbon group optionally interrupted and/or substituted by one or more heteroatoms, and a group comprising from 2 to 30 monomer units, the monomer units being selected from the group consisting of epoxy, ester, ether, amine, acrylic, siloxane and urethane monomer units,
- A comprising p free valencies, p having a value ranging from 1 to 20,
- it being understood that the 1 to 20 X radicals are identical or different.

9. Tyre according to any one of the preceding claims, wherein the manually transportable vehicle is selected from the group consisting of scooters, roller skates, in-line roller skates, skateboards, unicycles, segways and self-balancing scooters; preferably, the manually transportable vehicle is a scooter.

10. Tyre according to any one of the preceding claims, wherein the manually transportable vehicle has a weight of less than 42 kg, preferably within a range extending from 0.2 to 30 kg.

11. Tyre according to any one of the preceding claims, having a dimension of less than or equal to 16 inches, preferably within a range extending from 2 to 16 inches.

12. Tyre according to any one of the preceding claims, wherein the composition defined in any one of Claims 1 to 8 is present at least in the tread of said tyre.

13. Tyre according to any one of the preceding claims, said tyre being a non-pneumatic tyre, or a pneumatic tyre, preferably a non-pneumatic tyre.

14. Manually transportable vehicle wheel equipped with a tyre according to any one of Claims 1 to 13.

15. Manually transportable vehicle equipped with at least one wheel according to Claim 14.
